# EUROPÄISCHE PATENTSCHRIFT

(11) **EP 0 940 765 B1**
(45) Veröffentlichungstag und Bekanntmachung des Hinweises auf die Patenterteilung: **12.10.2005**
(21) Anmeldenummer: 99103556.9
(22) Anmeldetag: 24.02.1999
(51) Int. Cl.: G06K 13/08

(54) **Vorrichtung zum Transport von Datenkarten**
Device for transporting data cards
Appareil pour le transport de cartes de données

(30) Priorität: 06.03.1998 DE 19809619
(43) Veröffentlichungstag der Anmeldung: 08.09.1999
(73) Patentinhaber: SIEMENS AKTIENGESELLSCHAFT, 80333 München (DE)
(72) Erfinder: Burkart, Harald Dipl.-Ing. (FH), 78054 Villingen-Schwenningen (DE); Klostermeier, Dieter Dipl.-Ing. (FH), 78050 Villingen-Schwenningen (DE); Hügle, Axel Dipl.-Ing. (FH), 78120 Furtwangen (DE); Büscher, Ludwig Dipl.-Informatiker (FH), 78048 Villingen-Schwenningen (DE); Lindinger, Andreas Dipl.-Ing. (FH), 78658 Flözlingen (DE)

(56) Entgegenhaltungen:
- EP-A- 0 794 499
- DE-C- 19 545 502
- US-A- 4 724 310

## Beschreibung

Die Erfindung betrifft eine Vorrichtung zum Transport von Datenkarten zwischen einer Eingabe-/Entnahmeposition und einer Lese-/Schreibposition in einer Datenkartenaufnahme, an deren Frontwand ein Schlitz für die Eingabe-/Ausgabe der Datenkarte ausgebildet ist, wobei ein zwischen der Eingabe-/Entnahmeposition und der Lese-/Schreibposition bewegbarer Schlitten (10) mit einer für die Aufnahme der Datenkarte (11) ausgebildeten Fassung (28) vorgesehen ist, wobei der Schlitten (10) mittels Verriegelungsmitteln in der Eingabe-/Entnahmeposition verriegelbar ist.

Sollen Datenkartenaufnahmen in Geräten mit relativ geringer Bauhöhe vorgesehen werden, beispielsweise in Fahrtschreibern mit einem quaderförmigen Gehäuse beziehungsweise mit einem Gehäuse im Autoradioformat, so besteht nicht zuletzt wegen der bekanntermaßen hohen Packungsdichte solcher Geräte das Problem der Minimierung der Bauhöhe einer Datenkartenaufnahme. Außerdem sind derartige Fahrtschreiber, bei denen die mit Halbleiterspeichern ausgerüsteten Datenkarten den Fahrern zugeordnet sind und vornehmlich der fahrerbezogenen Speicherung von Arbeits- und Ruhezeiten dienen, extrem manipulationsgefährdet, so dass es erforderlich ist, die Datenkarten während der Lese- und Schreibvorgänge von außen unzugänglich in dem betreffenden Fahrtschreiber zu positionieren.

Dementsprechend sind Lösungen, bei welchen eine Datenkarte lediglich vorgesteckt und gegebenenfalls durch Riegel oder Blenden umschlossen beziehungsweise abgedeckt wird, für die geschilderte Anwendung ungeeignet. Außerdem verursachen derartige Maßnahmen eine unverhältnismäßig große Bauhöhe. Das heißt, es ist ein Transport der Datenkarten von einer Eingabe-/Entnahmeposition in eine Lese-/Schreibposition erforderlich, um einerseits eine Einflussnahme von außen zu verhindern, andererseits eine exakte Positionierung beziehungsweise Kontaktierung einer eingegebenen Datenkarte sicherzustellen. Dabei ist zu berücksichtigen, dass in dem vorgesehenen Einsatzmilieu, das heißt in einem Kraftfahrzeug, die Gefahr von Lageänderungen der Datenkarten infolge von betriebsbedingten Erschütterungen sowie erhebliche Schmutzbelastung, insbesondere durch Öle und Fette gegeben ist. Hinzu kommt, dass die Datenkarten relativ häufig gehandhabt werden müssen, wenigstens jedoch beim Wechsel Fahrer/Beifahrer und beim Fahrzeugwechsel. Demzufolge bietet ein friktioneller Transport der Datenkarten, beispielsweise mittels Rollen, keine ausreichende Transportsicherheit.

Aus der europäischen Patentanmeldung EP 0 794 499 A2 ist bereits eine Vorrichtung der eingangs genannten Art bekannt, welche eine Freisparung in einem Boden des Schlittens aufweist, durch welche die eingegebene Datenkarte in der Lese-/Schreibposition an Kontakten eines Kontaktsatzes anliegt. Ähnliche Vorrichtungen sind außerdem aus der deutschen Patentschrift DE 195 45 502 C1 und dem US-Patent US 4,724,310 bekannt. Sämtlichen dieser Anordnung gemeinsam ist der Nachteil einer unzureichenden Verriegelung, die insbesondere einer Anwendung als Datenkartenaufnahme für einen Fahrtschreiber für Nutzfahrzeuge nicht gerecht wird.

Die Aufgabe der Erfindung war es somit, eine Vorrichtung zum Transport von Datenkarten zwischen einer Eingabe-/Entnahmeposition und einer Lese-/Schreibposition zu schaffen, welche bei den gegebenen rauhen Betriebsbedingungen in einem Kraftfahrzeug eine zuverlässige Funktion bietet, weitgehend manipulationssicher ist und in einem relativ flachen Gerät raumschonend realisiert werden kann. Darüber hinaus muss im Hinblick auf eine Anwendung in Fahrtschreibern gefordert werden, dass die Vorrichtung serientauglich und mit geringem Aufwand herstellbar ist.

Diese Aufgabe wird durch eine Vorrichtung nach Anspruch 1 gelöst. Der Anspruch ist gegen das Dokument EP 0 794 499 A2 abgegrenzt.

Ein bevorzugtes Ausführungsbeispiel beschreibt der Anspruch 2. Weitere vorteilhafte Ausgestaltungen der Erfindung gehen aus den den Ansprüchen 1 und 2 nachgestellten Unteransprüchen hervor.

Den Vorteil, den die Erfindung bietet, ist insbesondere darin zu sehen, dass der Transport einer Datenkarte mittels eines friktionsfreien, mechanisch gekoppelten Kippsprungwerkes erfolgt, das durch das Eingeben einer Datenkarte ausgelöst wird. Dabei wird die Datenkarte der eingebenden Hand mit hoher Beschleunigung entnommen und in eine stabile Lage, nämlich die Lese-/Schreibposition geführt. Der Aufwand der vorgesehenen Transportmittel ist, da Sensoren und motorisch betätigte Bauelemente vermieden sind, sehr gering. Außerdem ist durch die im Schlitten integrierte Lagerung beziehungsweise die schlittenbündige Führung der beiden Schieber eine besonders flache Bauform sowie eine als Einheit montierbare Baugruppe erzielt worden. Als Vorteil seien ferner die vorgesehenen flachen Prismenführungen der Schieber mit jeweils einem von der Gegenseite eingelassenen und mit dem jeweiligen Schieber verbundenen Sicherungselemente erwähnt, wobei sich diese Anordnung beispielsweise auch für eine 3-Komponenten-Spritztechnik eignet. Besonders hervorgehoben sei außerdem die Tatsache, dass die Mitnahme einer Datenkarte mittels des Schlittens durch seitliches Greifen und Festspannen auf dem Schlitten erfolgt und auf diese Weise Mitnahme- beziehungsweise Einzugsprobleme durch verschmutzte, insbesondere einen Fettfilm aufweisende Datenkarten umgangen sind. Dabei ermöglicht das seitliche Greifen der Datenkarten eine relativ hohe spezifische Flächenpressung, so dass eine sichere Mitnahme und eine zuverlässige Lagesicherung in der Lese-/Schreibposition gewährleistet ist. Vorteilhaft ist in dieser Hinsicht auch die in dem nachfolgend anhand der Zeichnungen beschriebenen, bevorzugten Ausführungsbeispiel vorgesehene Lösung, bei der für die Verriegelung des Schlittens in der Eingabe-/Entnahmeposition und für das Festspannen einer Datenkarte auf dem Schlitten nur ein Bauteil erforderlich ist.

Von den Zeichnungen zeigen:
- Figur 1: eine Übersichtsdarstellung der erfindungsgemäßen Transportvorrichtung und deren Anordnung, beispielsweise in einem Gerät mit einem quaderförmigen Gehäuse,
- Figur 2: eine perspektivische Draufsicht der aus dem Schlitten und dem ersten und zweiten Schieber gebildeten Baugruppe,
- Figur 3: eine Untersicht der Schlitten-Baugruppe mit einer Stellung der Schieber, die der Eingabe-/Entnahmeposition des Schlittens entspricht,
- Figur 4: eine Untersicht der Schlitten-Baugruppe mit einer Stellung der Schieber, die der Lese-/Schreibposition des Schlittens entspricht,
- Figur 5: eine Draufsicht der Transportvorrichtung mit Freischnitten in mehreren Ebenen in einem Funktionszustand, der im Gegensatz zu Figur 1 der Eingabe-/Entnahmeposition des Schlittens entspricht,
- Figur 6: eine Seitenansicht der Transportvorrichtung in der Lese-/Schreibstellung des Schlittens.

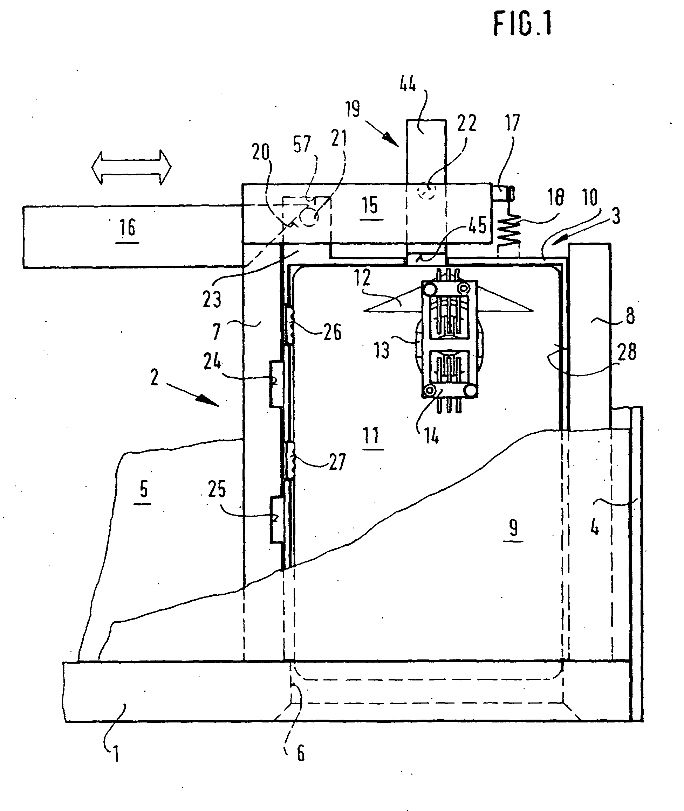

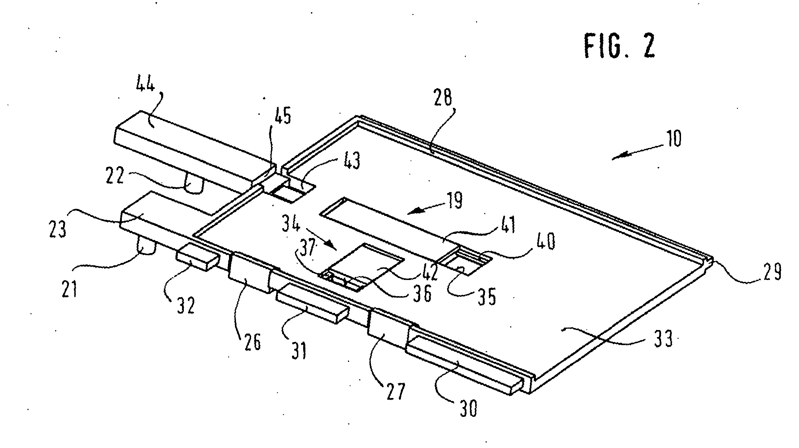

Bei der Übersichtsdarstellung, Figur 1, ist mit 1 eine Frontwand eines Gehäuses, beispielsweise eines Fahrtschreibers bezeichnet, in dem eine Datenkartenaufnahme 2 mit der erfindungsgemäßen Transportvorrichtung 3 angeordnet ist. Mit 4 soll eine Seitenwand und mit 5 ein Boden des betreffenden Gehäuses bezeichnet sein. In der Frontwand 1, in welcher in der Regel wenigstens verschiedene Tasten, - eine dient der Erzeugung eines Datenkarten-Ausgabesignals - und ein LC-Display angeordnet, jedoch weil nicht erfindungswesentlich, nicht dargestellt sind, ist ein Schlitz 6 vorgesehen, der als frontseitiger Zugang zur Datenkartenaufnahme 2 dient. Letztere umfaßt zwei Führungswangen 7 und 8, welche an einer Leiterplatte 9 des Gerätes in geeigneter Weise befestigt oder unmittelbar angeformt sind sowie einen in den Führungswangen 7, 8 verschiebbar gelagerten Schlitten 10, welcher als Träger für die Datenkarten ausgebildet ist. Die Figur 1 zeigt eine mit 11 bezeichnete Datenkarte, die mit einem Hinweispfeil 12 für die richtige Eingabelage und Eingaberichtung sowie mit einem Kontaktareal 13 versehen ist. Mit 14 ist ein dem Kontaktareal 13 zugeordneter, der Datenübertragung dienender Kontaktsatz bezeichnet, der an der Leiterplatte 9 befestigt ist. Der Datenkartenaufnahme 2 ist außerdem noch ein Lagerbock 15, der ebenfalls in der Leiterplatte 9 befestigt ist, zugeordnet. Er dient dem Schlitten 10 als Anschlag und einem für die Rückführung des Schlittens 10 vorgesehenen Schubglied 16 als Lagerung. An einem an dem Lagerbock 15 angebrachten Stift 18 ist das ortsfeste Ende einer den Transport des Schlittens 10 in die Lese-/Schreibposition, die in der Figur 1 dargestellt ist, bewirkenden Zugfeder 18 eingehängt. Außerdem dient der Lagerbock 15 einem ersten Schieber 19, der, was im folgenden noch näher erläutert wird, dem Schlitten 10 zugeordnet ist, als zusätzliche Führung. An dem Schubglied 16 ist, wie aus der Figur 1 weiter ersichtlich ist, eine in Schubrichtung schräge Anlauffläche 20 ausgebildet, die mit Führungszapfen 21 und 22 zusammenwirkt. Dabei ist, wie auch Figur 2 zeigt, der Führungszapfen 21 an einem am Schlitten 10 angeformten Fortsatz 23, mittels dessen der Schlitten 10 in der Lese-/Schreibposition am Lagerbock 15 anschlägt, ausgebildet, der Führungszapfen 22 an dem ersten Schieber 19. Aus der Figur 1 geht außerdem noch hervor, daß in der einen Führungswange 7 Freisparungen 24 und 25 ausgebildet sind. Diese dienen der Verriegelung des Schlittens 10 in der Eingabe-/Entnahmeposition indem sie mit an einem im folgenden noch zu beschreibenden zweiten Schieber angeformten Fingern 26 und 27 zusammenwirken.

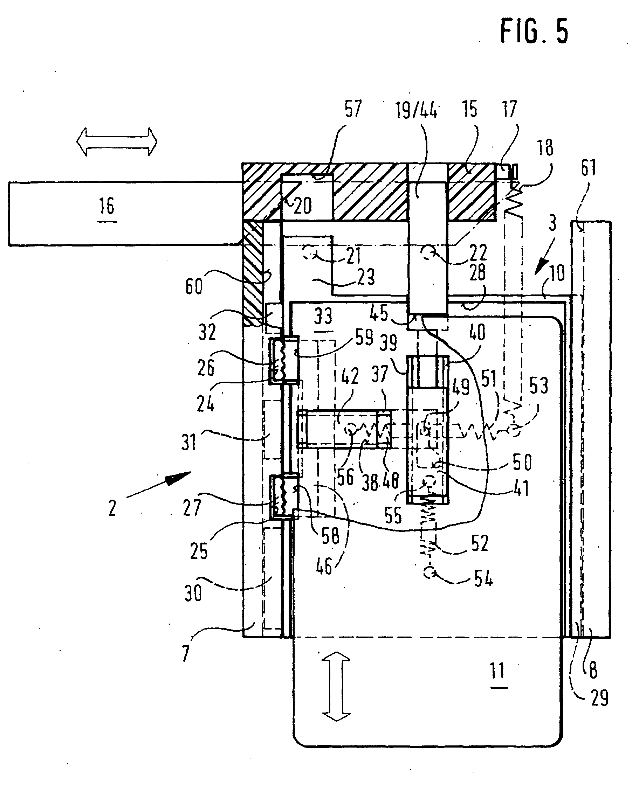

Die Draufsicht, Figur 2, zeigt, daß der Schlitten 10 im wesentlichen eine flache Platte darstellt, in welcher eine einer Datenkarte 11 zugeordnete Fassung 28 ausgebildet ist. Zur Halterung der Datenkarte 11 in der Fassung 28 des Schlittens 10 können außer dem Kontaktsatz 14 an der Leiterplatte 9 angeformte Niederhalter dienen. Seitlich am Schlitten 10 ausgebildete Leisten beziehungsweise Leistenelemente 29, 30, 31, 32 sind für die Lagerung des Schlittens 10 in den Führungswangen 7, 8 vorgesehen. In einem Boden 33 des Schlittens 10 sind der erste Schieber 19 und der zweite Schieber 34, an dem die Finger 26 und 27 ausgebildet sind, verschiebbar gelagert. Dabei sind in dem Boden 33 Durchbrüche 35 und 36 vorgesehen, innerhalb denen an gegenüberliegenden Wänden jeweils eine H-förmige Prismenführung ermöglichende Leisten 37, 38 beziehungsweise 39, 40 ausgebildet sind. Das heißt, zur Montage der Schieber 19, 34 und zur Komplettierung von deren Führungen sind Führungselemente 41 und 42 vorgesehen, die in geeigneter Weise mit den Schiebern 19 beziehungsweise 34 fest verbunden werden. Denkbar ist in diesem Zusammenhang auch die einteilige Ausbildung von Schieber und Führungselement durch die Anwendung der 3-Komponenten-Spritzgießtechnik. Wesentlich ist, daß die Führungselemente 41 und 42 mit der fassungsseitigen Fläche des Bodens 33 bündig abschließen. Mit 43 ist eine weitere Öffnung im Boden 33 des Schlittens 10 bezeichnet. Sie dient dem Eingreifen eines erhöht ausgebildeten, den Führungszapfen 22 tragenden Abschnitts 44 des ersten Schiebers 19 in die Fassung 28, wenn, wie beispielsweise die Figur 5 zeigt, der Schlitten 10 in der Eingabe-/Entnahmeposition verriegelt ist. Demzufolge wird über die Stirnfläche 45 des Abschnitts 44 beim Eingeben einer Datenkarte 11 der erste Schieber 19 betätigt und das im folgenden noch zu beschreibende Kippsprungwerk der Transportvorrichtung 3 ausgelöst.

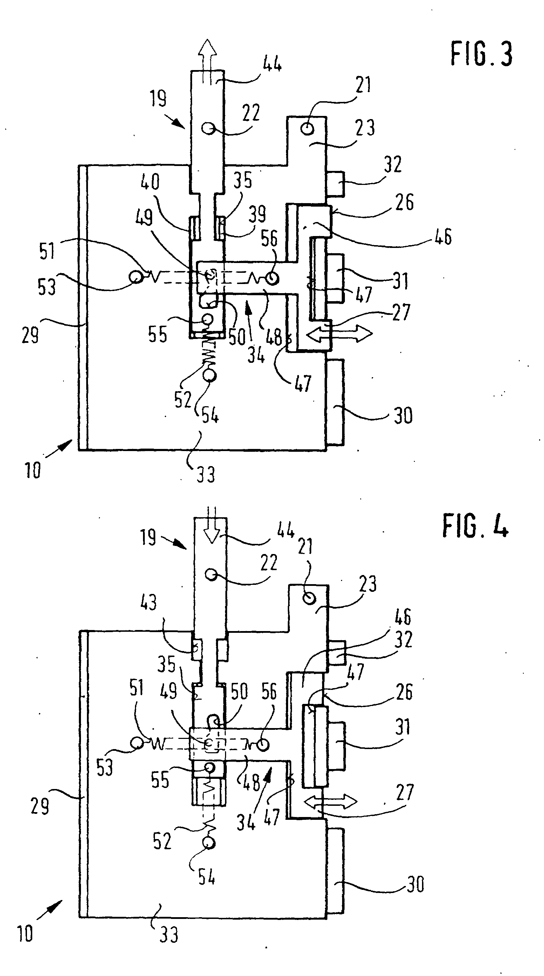

Die Untersicht, Figur 3, der vorstehend beschriebenen, eine funktionsfertige Baugruppe darstellenden Schlitten/Schieber-Kombination zeigt die beiden Schieber 19 und 34 in Ansicht. Dabei ist ersichtlich, daß der zweite Schieber 34 T-förmig ausgebildet ist, und daß die Finger 26 und 27 an den Enden eines Querbalkens 46 angeformt sind, der formschlüssig in eine Freisparung 47 des Schlittens 10 eingreift. Ferner zeigt die Figur 3, daß der zweite Schieber 34 den ersten Schieber 19 übergreift. Dieses Übergreifen erfolgt weitgehend spielfrei, das heißt, der erste Schieber 19 ist derart ausgebildet und im Boden 33 des Schlittens 10 geführt, daß er mit der der Fassung 28 gegenüberliegenden Fläche des Bodens 33 bündig ist. An dem zweiten Schieber 34 ist ein, nicht im Boden 33 geführter Arm 48 angeformt, der den ersten Schieber 19 übergreift beziehungsweise auf diesem aufliegt. Der Arm 48 trägt einen Stift 49, der mit einer in dem ersten Schieber 19 ausgebildeten Kulisse 50 im Sinne eines Keilgetriebes in Wirkverbindung steht. Die Kulisse 50 weist einen nicht näher bezeichneten Kippunkt auf, so daß unter der Wirkung zweier Zugfedern 51 und 52 die Schieber 19 und 34 zwei stabile Stellungen einnehmen können, mit anderen Worten, ein Kippsprungwerk gegeben ist. Zum Einhängen der Zugfedern 51 und 52 sind an dem Schlitten 10 Zapfen 53 und 54 ausgebildet und an den Schiebern 19 und 34 Pföstchen 55 und 56 angebracht. Der Vollständigkeit halber sei noch erwähnt, daß die Zugkraft der Zugfeder 51 zweckmäßigerweise erheblich größer gewählt werden sollte als diejenige der Zugfeder 52. Außerdem ist es denkbar, anstatt der Zugfedern 51, 52 Schenkelfedern vorzusehen, was zu einer weiteren Verringerung der Bauhöhe beitragen würde.

Die in der Figur 3 gezeigte Stellung der Schieber 19 und 34 entspricht einem Zustand, der in der Eingabe-/Entnahmeposition des Schlittens 10 gegeben ist. Wird in diesem Zustand der Transportvorrichtung eine Datenkarte 11 in die Datenkartenaufnahme 2 eingegeben, so wird mittels der Datenkarte 11 der Schieber 19 und über die keilgetriebliche Kopplung auch der Schieber 34 in Pfeilrichtung verschoben bis der Kippunkt des Kippsprungwerkes erreicht ist. Danach erfolgt unter der Wirkung der Zugfeder 51 ein selbsttätiger Transport der Schieber 19, 34 in eine Stellung, welche die Figur 4 zeigt. Eine Rückführung der Schieber 19, 34 aus diesem Zustand, der in der Lese-/Schreibposition des Schlittens 10 besteht, erfolgt durch Zusammenwirken des ersten Schiebers 19 mit dem Schubglied 16, wobei ebenfalls eine selbsttätige Bewegung erfolgt, wenn beim Transport durch das Schubglied 16 der Kippunkt des Kippsprungwerkes überschritten wird. Es sei noch erwähnt, daß in der in Figur 3 gezeigten Stellung des zweiten Schiebers 34 die Finger 26, 27 in die Freisparungen 24, 25 in der Führungswange 7 eingreifen und somit der Schlitten 10 verriegelt ist. Bei der Darstellung gemäß Figur 4 ist diese Verriegelung aufgehoben und der Schlitten 10 wird unter der Wirkung der Zugfeder 18, die beispielsweise an dem Zapfen 53 angreift, in die Lese-/Schreibposition transportiert, in der der Fortsatz 23 des Schlittens 10 an einer im Lagerbock 15 ausgebildeten Anschlagfläche 57 (Figur 5) anschlägt. Gleichzeitig mit dem Lösen der Verriegelung erfolgt mittels der am zweiten Schieber 34 ausgebildeten Finger 26, 27 auch ein Festspannen der in der Fassung 28 des Schlittens 10 liegenden Datenkarte 11, und zwar durch seitliches Greifen der Datenkarte 11, wobei ein schlupfreies Greifen durch eine geeignete, nicht näher bezeichnete Verzahnung der Finger 26, 27 gewährleistet ist.

Aus der ergänzenden Draufsicht, Figur 5, die den Schlitten 10 beziehungsweise die Transportvorrichtung in der Eingabe-/Entnahmeposition zeigt, läßt sich als wesentlich entnehmen, daß nach einer Lese-/Schreibphase die Datenkarte 11 entweder zur Entnahme bereitgestellt ist oder bei einer Eingabe der Datenkarte 11 diese stirnseitig mit der Stirnfläche 45 des ersten Schiebers 19 zusammenwirkt und den ersten Schieber 19 bis zum Schalten des Kippsprungwerkes verschiebt, wonach ein selbsttätiger Transport in die Lese-/Schreibposition erfolgt. Bei der Rückführung aus dieser Position - mit 60 und 61 sind in dem Schlitten 10 zugeordnete Führungsnute bezeichnet - wirkt in Form eines Keilgetriebes zuerst die Anlauffläche 20 des Schubgliedes 16 mit dem Führungszapfen 21 zusammen, wodurch der Schlitten 10 in die Eingabe-/Entnahmeposition verschoben wird, die Finger 26, 27 zunächst jedoch noch den Freisparungen 24, 25 gegenüberstehen. Nachfolgend kommt beim weiteren Vorschub des Schubgliedes 16 die Anlauffläche 20 auch mit dem Führungszapfen 22 in Wirkverbindung, was bei stillstehendem Schlitten 10 eine Verschiebung des ersten Schiebers 19 bewirkt, bei der die Datenkarte 11 freigegeben wird und die Finger 26, 27 mit den Freisparungen 24, 25 in Eingriff gehen. Nach dem Erreichen des Schaltpunktes des Kippsprungwerkes nehmen die Schieber 19 und 34 selbsttätig eine stabile Stellung ein, bei der entsprechend der Ausgestaltung der Kulisse 50 ein für die Verriegelung des Schlittens 10 ausreichender Eingriff der Finger 26, 27 in den Freisparungen 24, 25 bestehen bleibt. Die strichpunktierte Stellung des Schubgliedes 16 stellt dessen Endstellung in der Rückführphase der Transportvorrichtung 3 dar. Unmittelbar danach wird das Schubglied 16 in die Ausgangsstellung zurückbewegt, so daß die Datenkartenaufnahme 2 für die Eingabe einer Datenkarte 11 wieder frei ist.

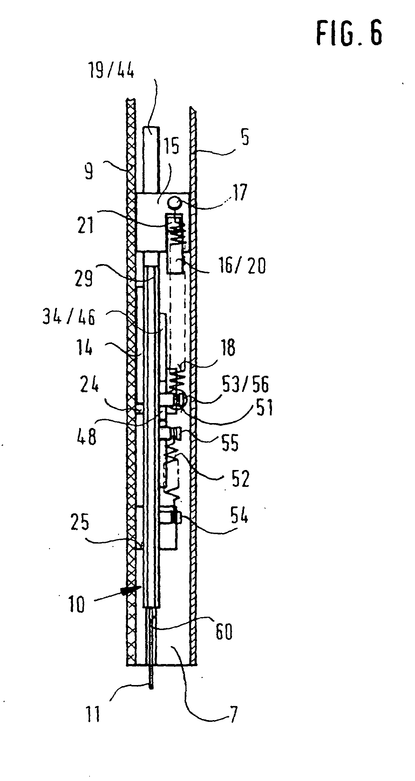

Die Figur 6, die eine Seitenansicht der Transportvorrichtung 3 darstellt, wobei die Führungswange 8 weggelassen ist, zeigt insbesondere die niedrige Bauhöhe zwischen der Leiterplatte 9 und dem Boden 5 des Gehäuses. Diese wird vor allem durch die flachen Führungen der beiden Schieber 19, 34 im Boden 33 des Schlittens 10 und die gegenseitige Verschachtelung und abstandsfreie Lagerung von Schlitten 10 und Schiebern 19, 34 erzielt.

Der Vollständigkeit halber sei noch erwähnt, daß eine Halterung der Datenkarte 11 auf dem Schlitten 10 vorzugsweise auch dadurch erfolgen kann, daß die Finger 26, 27 derart ausgebildet sind, daß sie in der Greifstellung eine Datenkarte 11 übergreifen und daß an der, den Fingern 26, 27 gegenüberliegenden Wand der Fassung 28, zweckmäßigerweise mehrere, die Datenkarte 11 übergreifende Haltenasen angeformt sind.

## Patentansprüche

1. Vorrichtung zum Transport von Datenkarten zwischen einer Eingabe-/Entnahmeposition und einer Lese-/Schreibposition in einer Datenkartenaufnahme, an deren Frontwand ein Schlitz für die Eingabe-/Ausgabe der Datenkarte ausgebildet ist, wobeiein zwischen der Eingabe-/Entnahmepositon und der Lese-/Schreibposition bewegbarer Schlitten (10) mit einer für die Aufnahme einer Datenkarte (11) ausgebildeten Fassung (28) vorgesehen ist, wobei der Schlitten (10) mittels Verriegelungsmitteln in der Eingabe-/Entnahmeposition verriegelbar ist,
**dadurch gekennzeichnet,**
**dass** dem Schlitten (10) Spannmittel für ein Festhalten der Datenkarte (11) in der Fassung (28) des Schlittens (10) zugeordnet sind,
**dass** der Schlitten (10) in der Eingabe-/Entnahmeposition verriegelt und in Richtung Lese-/Schreibpositon vorgespannt ist,
**dass** mittels einer Datenkarte (11), bei deren Eingaben durch den Schlitz (6) die Verriegelungsmittel im Sinne einer Entriegelung des Schlittens (10) betätigbar sind und
**dass** getriebliche Mittel vorgesehen sind, welche, gesteuert durch ein Datenkarten-Ausgabesignal, eine Rückführung des Schlittens (10) aus der Lese-/Schreibposition in die Eingabe-/Entnahmeposition bei gleichzeitigem Spannen einer die Vorspannung des Schlittens (10) liefernden Feder (18) und ein Verriegeln des Schlittens (10) in der Eingabe-/Entnahmeposition bewirken.

2. Vorrichtung nach Anspruch 1,
**dadurch gekennzeichnet,**
**daß** ein erster Schieber (19) vorgesehen ist, welcher auf dem Schlitten (10) in dessen Bewegungsrichtung verschiebbar gelagert ist, mit einem Abschnitt (44) in die Fassung (28) des Schlittens (10) eingreift und mittels einer Feder (52) entgegen der Eingaberichtung einer Datenkarte (11) vorgespannt ist,
**daß** ein zweiter Schieber (34) vorgesehen ist, welcher an dem Schlitten (10) quer zu dessen Bewegungsrichtung verschiebbar gelagert ist, mit wenigstens einem Riegel in eine Freisparung einer ortsfesten Führungswange (7) des Schlittens (10) eingreift, wenn dieser sich in der Eingabe-/Entnahmeposition befindet, und an welchem eine Feder (51) quer zur Bewegungsrichtung des Schlittens (10) angreift,
**daß** der erste und der zweite Schieber (19, 34) getrieblich miteinander in Wirkverbindung stehen und
**daß** der erste Schieber (19) nach der Rückführung des Schlittens (10) aus der Lese-/Schreibposition in die Eingabe-/Entnahmeposition in den Bewegungsraum der die Rückführung des Schlittens (10) bewirkenden getrieblichen Mittel eingreift.

3. Vorrichtung nach Anspruch 2,
**dadurch gekennzeichnet,**
**daß** der erste und der zweite Schieber (19, 34) über ein Keilgetriebe in Wirkverbindung stehen.

4. Vorrichtung nach Anspruch 3,
**dadurch gekennzeichnet,**
**daß** in dem ersten Schieber (19) eine Kulisse (50) ausgebildet ist und daß der zweite Schieber (34) einen in die Kulisse (50) eingreifenden Stift (49) trägt.

5. Vorrichtung nach Anspruch 2,
**dadurch gekennzeichnet,**
**daß** der zweite Schieber (34) als Spannelement ausgebildet ist, wobei das Festspannen einer Datenkarte (11) auf dem Schlitten (10) durch Einleiten der Spannkraft in der Ebene der Datenkarte (11) und durch Abstützen der Datenkarte (11) an einer Wand der an dem Schlitten (10) ausgebildeten, der Datenkarte (11) zugeordneten Fassung (28) erfolgt.

6. Vorrichtung nach Anspruch 5,
**dadurch gekennzeichnet,**
**daß** der Wand der Fassung (28), an der sich die Datenkarte (11) abstützt, eine Blattfeder zugeordnet ist.

7. Vorrichtung nach Anspruch 2,
**dadurch gekennzeichnet,**
**daß** zwischen den Schiebern (19, 34) und dem Boden (33) des Schlittens (10) flache Prismenführungen vorgesehen sind derart, daß jeweils wenigstens teilweise eine Seite der Schieber (19, 34) mit der fassungsseitigen Fläche des Bodens (33) bündig ist.

8. Vorrichtung nach Anspruch 7,
**dadurch gekennzeichnet,**
**daß** die Führungen der Schieber durch den Schiebern (19, 34) zugeordnete, fassungsseitig angebrachte und mit den Schiebern (19, 34) fest verbundene Führungselemente (41, 42) komplettiert sind.

9. Vorrichtung nach Anspruch 7,
**dadurch gekennzeichnet,**
**daß** der Schlitten (10) und die Schieber (19, 34) abstandsfrei zueinander, gleitend geführt sind.

10. Vorrichtung nach Anspruch 5,
**dadurch gekennzeichnet,**
**daß** der zweite Schieber (34) T-förmig ausgebildet ist und an den Enden des Querbalkens (46) Finger (26, 27) derart angeformt sind, daß die Finger (26, 27) bezüglich des Schlittens (10) in dessen Einlege-/Entnahmeposition eine Riegelfunktion und bezüglich einer eingelegten Datenkarte (11) eine beim Entriegeln des Schlittens (10) wirksam werdende Greiffunktion ausüben.

## Claims

1. Device for transporting data cards between an insertion/removal position and a read/write position in a data card receptacle, on the front wall of which a slot for the insertion/withdrawal of the data card is formed, a carriage (10) which can be moved between the insertion/removal position and the read/write position being provided with a holder (28) formed for receiving the data card (11), the carriage (10) being lockable in the insertion/removal position by means of locking means, **characterized in that** the carriage (10) is assigned clamping means for securing the data card (11) in the holder (28) of the carriage (10), **in that** the carriage (10) is locked in the insertion/removal position and is pretensioned in the direction of the read/write position, **in that** the locking means can be actuated in the sense of unlocking the carriage (10) by means of a data card (11), when it is inserted through the slot (6), and **in that** means constituting a gear mechanism are provided and, under the control of the data card withdrawal signal, bring about a return of the carriage (10) from the read/write position into the insertion/removal position, while at the same time tensioning a spring (18) which produces the pretensioning of the carriage (10), and a locking of the carriage (10) in the insertion/removal position.

2. Device according to Claim 1, **characterized in that** a first slide (19) is provided, which slide is mounted on the carriage (10) displaceably in the direction of movement of the latter, engages with a portion (44) in the holder (28) of the carriage (10) and is pretensioned by means of a spring (52) counter to the direction of insertion of a data card (11), **in that** a second slide (34) is provided, which slide is mounted on the carriage (10) displaceably transversely to the direction of movement of the latter, engages with at least one catch in a clearance of a fixed guiding side wall (7) of the carriage (10) when the latter is in the insertion/removal position, and on which a spring (51) acts transversely to the direction of movement of the carriage (10), **in that** the first and second slides (19, 34) are in operative connection with each other with the effect of a gear mechanism and **in that**, after the return of the carriage (10) from the read/write position into the insertion/removal position, the first slide (19) engages in the movement space of the means constituting a gear mechanism that bring about the return of the carriage (10).

3. Device according to Claim 2, **characterized in that** the first and second slides (19, 34) are in operative connection by means of a wedge mechanism.

4. Device according to Claim 3, **characterized in that** a slotted link (50) is formed in the first slide (19) and **in that** the second slide (34) carries a pin (49) engaging in the slotted link (50).

5. Device according to Claim 2, **characterized in that** the second slide (34) is formed as a clamping element, the clamping of a data card (11) on the carriage (10) taking place by introducing the tensioning force in the plane of the data card (11) and by supporting the data card (11) on a wall of the holder (28) that is formed on the carriage (10) and assigned to the data card (11).

6. Device according to Claim 5, **characterized in that** the wall of the holder (28) on which the data card (11) is supported is assigned a leaf spring.

7. Device according to Claim 2, **characterized in that** flat prismatic guideways are provided between the slides (19, 34) and the base (33) of the carriage (10) in such a way that in each case one side of the slides (19, 34) is at least partially flush with the surface of the base (33) on the holder side.

8. Device according to Claim 7, **characterized in that** the guides of the slides are completed by guiding elements (41, 42), which are assigned to the slides (19, 34), are attached on the holder side and are firmly connected to the slides (19, 34).

9. Device according to Claim 7, **characterized in that** the carriage (10) and the slides (19, 34) are guided in a sliding manner without any spacing in relation to one another.

10. Device according to Claim 5, **characterized in that** the second slide (34) is formed in a T-shaped manner and fingers (26, 27) are formed on the ends of the transverse bar (46) in such a way that the fingers (26, 27) perform a catching function with respect to the carriage (10) in its insertion/removal position and a gripping function with respect to an inserted data card (11), becoming effective when the carriage (10) is unlocked.

## Revendications

1. Dispositif destiné au transport de cartes de données entre une position d'entrée et de sortie et une position de lecture et écriture dans un support de cartes de données, dans la paroi avant duquel est ménagée une fente pour l'entrée et la sortie de la carte de données, où il est prévu un chariot (10) se déplaçant entre la position d'entrée et de sortie et la position de lecture et écriture et comportant un cadre (28) conçu pour supporter la carte de données (11),
le chariot (10) pouvant être verrouillé dans la position d'entrée et de sortie à l'aide de moyens de verrouillage,
**caractérisé par le fait**
**que** des moyens de serrage destinés à maintenir la carte de données (11) dans le cadre (28) du chariot (10) sont affectés au chariot (10),
**que** le chariot (10) est verrouillé dans la position d'entrée et de sortie et soumis à une précontrainte dans la direction de la position de lecture et écriture,
**que** les moyens de verrouillage peuvent être actionnés, au moyen d'une carte de données (11) lors de son introduction dans la fente (6), dans le sens d'un déverrouillage du chariot (10) et
**qu'**il est prévu des moyens d'entraînement qui provoquent, commandés par un signal de libération de la carte, un retour du chariot (10) de la position de lecture et écriture dans la position d'entrée et de sortie, tout en tendant simultanément un ressort (18) fournissant la précontrainte du chariot (10), et le verrouillage du chariot (10) dans la position d'entrée et de sortie.

2. Dispositif selon la revendication 1
**caractérisé par le fait**
**qu'**il est prévu un premier coulisseau (19), qui est monté sur le chariot (10), de telle manière qu'il puisse coulisser dans la direction de son déplacement, comportant une partie (44) qui s'engage dans le cadre (28) du chariot (10), et qui est soumis, par un ressort (52) à une précontrainte à l'inverse de la direction d'introduction d'une carte de données,
**qu'**il est prévu un deuxième coulisseau (34) monté sur le chariot (10), de telle manière qu'il puisse coulisser perpendiculairement à la direction de son déplacement, comportant au moins un verrou qui s'engage dans une ouverture de la joue fixe de guidage (7) du chariot (10), lorsque celui-ci se trouve dans la position d'entrée et de sortie, et sur lequel est accroché un ressort (51) perpendiculaire à la direction de déplacement du chariot (10),
**que** le premier et le deuxième coulisseau (19, 34) sont en prise l'un avec l'autre et entraînés l'un par l'autre,
**que** le premier coulisseau (19), après le retour du chariot (10) de la position de lecture et écriture dans la position d'entrée et de sortie, intervient dans l'espace de déplacement des moyens d'entraînement provoquant le retour du chariot (10).

3. Dispositif selon la revendication 2
**caractérisé par le fait**
**que** le premier et le deuxième coulisseau (19, 34) sont en prise l'un avec l'autre par l'intermédiaire d'un entraînement à clavette.

4. Dispositif selon la revendication 3
**caractérisé par le fait**
**qu'**une coulisse (50) est ménagée dans le premier coulisseau (19) et
**que** le deuxième coulisseau (34) porte une cheville (49) qui s'introduit dans la coulisse (50).

5. Dispositif selon la revendication 2
**caractérisé par le fait**
**que** le deuxième coulisseau (34) est conçu comme élément de serrage, la fixation de la carte de données (11) sur le chariot (10) se faisant en appliquant la force de serrage dans le plan de la carte de données (11) et en soutenant la carte de données (11) sur une paroi du cadre (28) formé sur le chariot (10) et affecté à la carte de données (11).

6. Dispositif selon la revendication 5
**caractérisé par le fait**
**qu'**un ressort à lame est affecté à la paroi du cadre (28) sur laquelle s'appuie la carte de données (11).

7. Dispositif selon la revendication 2
**caractérisé par le fait**
**qu'**il est prévu, entre les coulisseaux (19, 34) et le fond (33) du chariot (10), des guidages plats à prismes tels que, dans chaque cas, au moins partiellement, un côté du coulisseau (19, 34) est en affleurement avec la surface du fond (33) se trouvant du côté du cadre.

8. Dispositif selon la revendication 7
**caractérisé par le fait**
**que** les guidages des coulisseaux sont complétés par des éléments de guidage (41, 42) affectés aux coulisseaux (19, 34), montés du côté du cadre et liés d'une façon fixe aux coulisseaux (19, 34).

9. Dispositif selon la revendication 7
**caractérisé par le fait**
**que** le chariot (10) et les coulisseaux (19, 34) sont guidés en glissant, sans écartement les séparant.

10. Dispositif selon la revendication 5
**caractérisé par le fait**
**que** le deuxième coulisseau (34) est en forme de T et que des doigts (26, 27) sont ménagés aux extrémités de la traverse (46) de telle manière que les doigts (26, 27) exercent, par rapport au chariot (10), dans sa position d'entrée et de sortie, une fonction de verrouillage et, par rapport à une carte de données (11) qui y est introduite, une fonction de saisie devenant active lors du déverrouillage du chariot (10).
